(19) Europäisches Patentamt
European Patent Office
Office européen des brevets

(11) **EP 3 654 058 A1**

(12) **EUROPEAN PATENT APPLICATION**

(43) Date of publication:
**20.05.2020 Bulletin 2020/21**

(51) Int Cl.:
**G01S 13/44** (2006.01)       **H01Q 3/26** (2006.01)
**H01Q 21/22** (2006.01)

(21) Application number: **18206721.5**

(22) Date of filing: **16.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Teknologian Tutkimuskeskus VTT Oy 02150 Espoo (FI)**

(72) Inventors:
• **HIRVONEN, Mervi**
  **02044 VTT (FI)**
• **KIURU, Tero**
  **02044 VTT (FI)**

(74) Representative: **Laine IP Oy
Porkkalankatu 24
00180 Helsinki (FI)**

(54) **DIGITAL BEAMFORMING FOR RADARS**

(57)    According to an example aspect of the present invention, there is provided an apparatus comprising a receiver configured to receive a first version of a reflected signal and a second version of the reflected signal, and a processing unit configured to determine a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal, wherein the processing unit is further configured to determine a magnitude and angle image based at least on the first received version, second received version and mirrored version of the reflected signal.

Receiving a first version and a second version of a reflected signal    610

Determining a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal    620

Determining a magnitude and angle image based at least on the first received version, the second received version and the mirrored version of the reflected signal    630

FIGURE 6

EP 3 654 058 A1

**Description**

FIELD

Embodiments of the present invention relate in general to radars and more specifically to digital beamforming for radars.

BACKGROUND

Radars may be used for detecting various objects by exploiting characteristics of radio waves. For example, a distance or direction to an object may be estimated using radars. In addition, radars may be utilized for estimating a speed of an object. Radars typically use radio waves at frequencies ranging from 30 Hz to 300 GHz. Thus, radars are capable of sensing in all environmental conditions, such as, in direct sunlight, darkness, smoke, rain or dust. However, compared to optical sensors, such as, lidars, a drawback associated with the use of radars is that an angular resolution of a radar may be a problem for some applications and massive antenna systems may be needed for achieving good angular resolution. There is therefore a need for providing an improved apparatus, method and computer program for achieving better angular resolution without increasing the size of a radar.

SUMMARY OF THE INVENTION

According to some aspects, there is provided the subject-matter of the independent claims. Some embodiments are defined in the dependent claims.

According to a first aspect of the present invention, there is provided an apparatus comprising a receiver configured to receive a first version of a reflected signal and a second version of the reflected signal, and a processing unit configured to determine a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal, wherein the processing unit is further configured to determine a magnitude and angle image based at least on the first received version, second received version and mirrored version of the reflected signal.

According to the first aspect of the present invention, the mirroring may comprise mirroring the phase of the second received version of the reflected signal over the phase of the first received version of the reflected signal.

According to the first aspect of the present invention, the processing unit may be further configured to determine a phase difference between the phase of the first received version of the reflected signal and the phase of the second received version of the reflected signal and determine the phase of the mirrored version of the reflected signal using the phase difference, wherein the mirroring comprises setting the phase of the mirrored version as opposite to the determined phase difference.

According to the first aspect of the present invention, the first and second received versions may be received via real antennas and the mirrored version of the reflected signal may be associated with a virtual antenna.

According to the first aspect of the present invention, the apparatus may further comprise a transmitter configured to transmit a signal, wherein the transmitted signal may be a Frequency-Modulated Continuous Wave, FMCW, pulse or an arbitrary waveform signal, possibly an Orthogonal Frequency Division Multiplexed, OFDM, signal.

According to the first aspect of the present invention, the apparatus may further comprise a transmit antenna array configured to transmit $M$ versions of a signal via $M$ transmit antennas, a receive antenna array configured to receive $M$ reflected versions of the signal via each of $N$ receive antennas, wherein the processing unit is further configured to determine the magnitude and angle image based at least partially on the received $M*N$ reflected versions of the signal.

According to the first aspect of the present invention, the processing unit may be further configured to generate an extrapolated version of the reflected signal by extrapolating using at least the received first and second versions of the reflected signal, determine an extrapolated mirrored version of the reflected signal by mirroring a phase of the extrapolated version of the reflected signal with respect to the phase of the first received version of the reflected signal and setting an amplitude of the extrapolated version of the reflected signal as an amplitude of the extrapolated mirrored version of the reflected signal and determine the magnitude and angle image based at least on the extrapolated and the extrapolated mirrored versions of the reflected signal.

According to the first aspect of the present invention, the processing unit may be further configured to generate an interpolated version of the reflected signal, determine an interpolated mirrored version of the reflected signal by mirroring a phase of the interpolated version of the reflected signal with respect to the phase of the first received version of the reflected signal and setting an amplitude of the interpolated version of the reflected signal as an amplitude of the interpolated mirrored version of the reflected signal and determine the magnitude and angle image based at least on the interpolated and the interpolated mirrored versions of the reflected signal.

According to a second aspect of the present invention, there is provided a method for a radar, comprising, receiving a first version of a reflected signal, receiving a second version of the reflected signal, determining a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal and determining a magnitude and angle image based at least on the first received version, second received version and mirrored version of the reflected signal.

According to the second aspect of the present invention, the mirroring may comprise mirroring the phase of the second received version of the reflected signal over the phase of the first received version of the reflected signal.

According to a second aspect of the present invention, the method may further comprise determining a phase difference between the phase of the first received version of the reflected signal and the phase of the second received version of the reflected signal and determining the phase of the mirrored version of the reflected signal using the phase difference, wherein the mirroring comprises setting the phase of the mirrored version as opposite to the determined phase difference.

According to a second aspect of the present invention, the first and second received versions may be received via real antennas and the mirrored version of the reflected signal may be associated with a virtual antenna.

According to a second aspect of the present invention, the method may further comprise transmitting a signal, wherein the transmitted signal may be a Frequency-Modulated Continuous Wave, FMCW, pulse or an arbitrary waveform signal, possibly an Orthogonal Frequency Division Multiplexed, OFDM, signal.

According to a second aspect of the present invention, the method may further comprise transmitting $M$ versions of a signal via $M$ transmit antennas, receiving $M$ reflected versions of the signal via each of $N$ receive antennas and determining the magnitude and angle image based at least partially on the received $M*N$ reflected versions of the signal.

According to a second aspect of the present invention, the method may further comprise generating an extrapolated version of the reflected signal by extrapolating using at least the received first and second versions of the reflected signal, determining an extrapolated mirrored version of the reflected signal by mirroring a phase of the extrapolated version of the reflected signal with respect to the phase of the first received version of the reflected signal and setting an amplitude of the extrapolated version of the reflected signal as an amplitude of the extrapolated mirrored version of the reflected signal and determining the magnitude and angle image based at least on the extrapolated and the extrapolated mirrored versions of the reflected signal.

According to a second aspect of the present invention, the method may further comprise generating an interpolated version of the reflected signal, determining an interpolated mirrored version of the reflected signal by mirroring a phase of the interpolated version of the reflected signal with respect to the phase of the first received version of the reflected signal and setting an amplitude of the interpolated version of the reflected signal as an amplitude of the interpolated mirrored version of the reflected signal and determining the magnitude and angle image based at least on the interpolated and the interpolated mirrored versions of the reflected signal.

According to a third aspect of the present invention, there is provided a computer program configured to perform a method according to the second aspect.

BRIEF DESCRIPTION OF THE DRAWINGS

FIGURE 1 illustrates operation of an exemplary radar system in accordance with at least some embodiments of the present invention;

FIGURE 2 illustrates an example apparatus capable of supporting at least some embodiments of the present invention;

FIGURE 3 illustrates a first example of mirroring in accordance with at least some embodiments of the present invention;

FIGURE 4 illustrates a second example of mirroring in accordance with at least some embodiments of the present invention;

FIGURE 5 illustrates a third example of mirroring in accordance with at least some embodiments of the present invention;

FIGURE 6 illustrates a flow graph of a method in accordance with at least some embodiments of the present invention.

EMBODIMENTS

Angular resolution of radars may be improved by the procedures described herein. In more detail, mirroring may be exploited for generating at least one mirrored version of a received signal based on a first and a second version of the received signal. The at least one mirrored version of the received signal, in addition to the first and the second version of the received signal, may be used for determining a magnitude and angle image, thereby improving an angular resolution of a radar.

For example, angular resolution plays an increasingly important role for imaging radars. Important applications may be found in relation to automotive, aviation, robotics, people tracking and life sign monitoring. Moreover, in many cases constrains for a size of a radar, complexity and latency may be strict. Traditionally, the angular resolution of the radar is limited by the size of an aperture of a receive antenna array. Large physical size and complex structures are therefore needed for achieving good angular resolution.

At least in the contexts of automotive and aviation, there is a clear need for identifying, i.e., separating, closely spaced objects, such as, other vehicles and pedestrians. In automotive and aviation related applications distances between radars and objects, i.e., detection distances, may be long while limitations for physical dimensions and mass may be stringent due to wind load. Similar challenges may arise in the contexts of robotics and drones. In addition, robots and drones may have additional limitations for power consumption. Moreover, similar issues need to be tackled for people tracking and life sign monitoring applications as well. In consumer markets, such as, home care and smart office, cost-efficiency may also be a key factor.

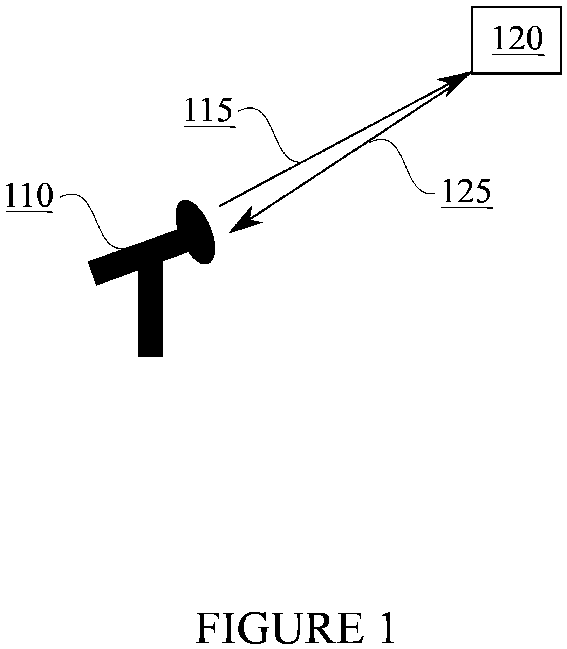

FIGURE 1 illustrates operation of an exemplary radar system in accordance with at least some embodiments of the present invention. The exemplary radar system of FIGURE 1 may comprise apparatus 110 and object 120. Apparatus 110 may be for a radar, i.e., apparatus 110 may be a radar or a control device configured to control the functioning of the radar, possibly when installed therein. The control device may also be a computer. The computer may be connectable to the radar. Depending on the application, object 120 may be for example a car, airplane, ship or human. Naturally, object 120 may be any other object detectable by apparatus 110 as well and the embodiments of the present invention are not limited to any specific object 120.

Apparatus 110 may comprise a transmitter and the transmitter may comprise means for transmitting, or be configured to transmit, electromagnetic signal 115 over air interface via at least one transmit antenna. Thus, the transmitter may comprise, or be connectable, to the at least one transmit antenna. In case of two or more transmit antennas, said two or more transmit antennas may form a transmit antenna array. The transmitter may receive information associated with electromagnetic signal 115 from a processing unit of apparatus 110. If apparatus 110 is a control device, e.g., a computer, connectable to a radar, the computer may transmit the information to the radar.

Electromagnetic signal 115 may be radiated into space by the at least one transmit antenna. The at least one transmit antenna may comprise at least one antenna, such as a microstrip antenna or subarray, which may be used for radiating electromagnetic signal 115. Thus, the at least one transmit antenna may be referred to as a physical antenna as well. For example, multiple transmit antennas may be arranged in columns and/or rows, i.e., vertically and/or horizontally, to form the transmit antenna array, forming multiple transmit channels correspondingly.

Apparatus 110 may also comprise a receiver. Electromagnetic signal 115 transmitted by apparatus 110 may hit object 120 and thus get reflected back to apparatus 110. Reflected electromagnetic signal 125 may be hence referred to as an echo signal as well.

The receiver may comprise means for, or be configured to, receive electromagnetic signal 125 over air interface via at least two receive antennas. Thus, the receiver may comprise, or be connectable, to the at least two receive antennas, forming at least two receive channels correspondingly. The at least two receive antennas may comprise at least two receive antennas, such as microstrip antennas or subarrays, which may be used for receiving different versions of electromagnetic signal 125. Thus, the at least two receive antennas may be referred to as physical, real antennas as well.

Said at least two receive antennas may form a receive antenna array. Hence, the receiver may be used for receiving at least two different versions of reflected electromagnetic signal 125 via the at least two antennas. The receiver may forward information associated with the received at least two different versions of reflected electromagnetic signal 125 to the processing unit of apparatus 110. Information associated with the received at least two different versions of reflected electromagnetic signal 125, such as a phase and amplitude, may be stored to a memory of apparatus 110. If apparatus 110 is a control device, e.g., a computer, connectable to a radar, the receiver may receive the information from the radar.

In general, an antenna array comprising multiple antennas in a horizontal or a vertical direction may be referred to as a 1-dimensional antenna array and an antenna array comprising multiple antennas in both, horizontal and vertical, directions may be referred to as a 2-dimensional antenna array.

In some embodiments, apparatus 110 may be a radar, such as, a Frequency-Modulated Continuous Wave, FMCW, radar. In case of a FMCW radar, the transmitter may transmit more than one electromagnetic signal 115 with the same transmission power but the FMCW radar may change a frequency of transmission during the process. That is to say, the FMCW radar may exploit frequency modulation. Alternatively, in some embodiments apparatus 110 may be a pulse radar or an Orthogonal Frequency Division Multiplexing, OFDM, radar, or any other arbitrary waveform radar.

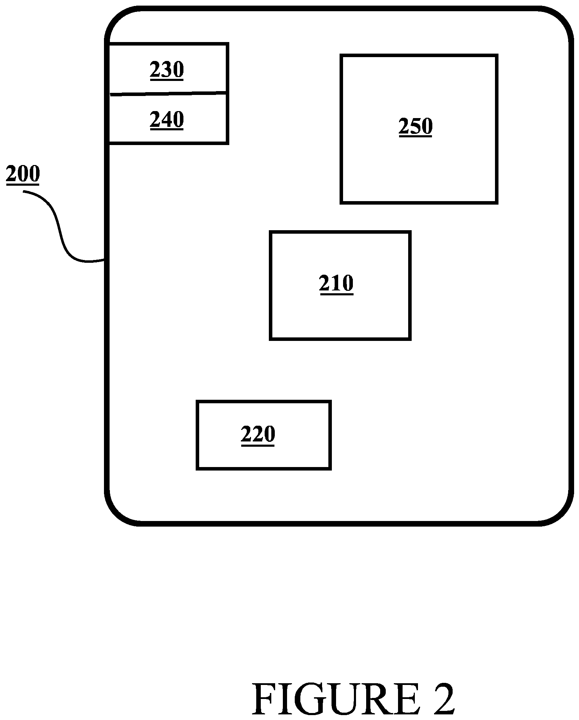

FIGURE 2 illustrates an example apparatus capable of supporting at least some embodiments of the present invention. Illustrated is apparatus 200, which may comprise or correspond to apparatus 110 of FIGURE 1. That is to say, apparatus 200 may also be for a radar, e.g., a radar or a control device configured to control the functioning of the radar, such as a computer for controlling the radar.

Comprised in apparatus 200 may be processing unit, i.e., processing element, 210, which may further comprise, for example, a single- or multi-core processor wherein a single-core processor comprises one processing core and a multi-core processor comprises more than one processing core. Processing unit 210 may comprise, in general, a control device. Processing unit 210 may comprise one or more processors. Processing unit 210 may be a control device. A processing core may comprise, for example, a Cortex-A8 processing core manufactured by ARM Holdings or a Steamroller processing core produced by Advanced Micro Devices Corporation. Processing unit 210 may comprise at least one Qualcomm Snapdragon and/or Intel Atom processor. Processing unit 210 may comprise at least one Application-Specific Integrated Circuit, ASIC. Processing unit 210 may comprise at least one Field-Programmable Gate Array, FPGA. Processing unit 210 may be means for performing method steps in apparatus 200. Processing unit 210 may be configured, at least in part by computer instructions, to perform actions.

Apparatus 200 may comprise memory 220. Memory 220 may comprise Random-Access Memory, RAM, and/or permanent memory. Memory 220 may comprise at least one RAM chip. Memory 220 may comprise solid-state, magnetic, optical and/or holographic memory, for example. Memory 220 may be at least in part accessible to processing unit 210. Memory 220 may be at least in part comprised in processing unit 210. Memory 220 may be means for storing information, such as a phase and amplitude of a reflected signal. Memory 220 may comprise computer instructions that processing unit 210 is configured to execute. When computer instructions configured to cause processing unit 210 to perform certain actions are stored in memory 220, and apparatus 200 overall is configured to run under the direction of processing unit 210 using computer instructions from memory 220, processing unit 210 and/or its at least one processing core may be considered to be configured to perform said certain actions. Memory 220 may be at least in part comprised in processing unit 210. Memory 220 may be at least in part external to apparatus 200 but accessible to apparatus 200.

Apparatus 200 may comprise a transmitter 230. The transmitter 230 may comprise at least one transmit antenna, or the transmitter 230 may be connectable to at least one transmit antenna. If apparatus 200 is a control device for a radar, the transmitter 230 may be connectable to the radar or to the at least one antenna via the radar. Multiple transmit antennas may form a transmit antenna array, forming multiple transmit channels correspondingly.

Apparatus 200 may also comprise a receiver 240. The receiver may comprise at least two receive antennas, or the receiver may be connectable to the at least two receive antennas, forming at least two receive channels correspondingly. If apparatus 200 is a control device for a radar, the receiver 230 may be connectable to the radar or to the at least two antennas via the radar. The at least two receive antennas may form a receive antenna array. Transmitter 230 and receiver 240 may be configured to cause transmission and reception of electromagnetic signals, respectively.

Apparatus 200 may also comprise a user interface, UI, 250. UI 250 may comprise at least a display or a touchscreen. A user may be able to operate apparatus 200 via UI 250. Also, UI 250 may be used for displaying information to the user. For example, UI 250 may be used for displaying a magnitude and/or angle image.

Processing unit 210 may be furnished with a transmitter arranged to output information from processing unit 210, via electrical leads internal to apparatus 200, to other devices comprised in apparatus 200. Such a transmitter may comprise a serial bus transmitter arranged to, for example, output information via at least one electrical lead to memory 220 for storage therein. Alternatively to a serial bus, the transmitter may comprise a parallel bus transmitter. Likewise processing unit 210 may comprise a receiver arranged to receive information in processing unit 210, via electrical leads internal to apparatus 200, from other devices comprised in apparatus 200. Such a receiver may comprise a serial bus receiver arranged to, for example, receive information via at least one electrical lead from receiver 240 for processing in processing unit 210. Alternatively to a serial bus, the receiver may comprise a parallel bus receiver.

Processing unit 210, memory 220, transmitter 230, receiver 240 and/or UI 250 may be interconnected by electrical leads internal to apparatus 200 in a multitude of different ways. For example, each of the aforementioned devices may be separately connected to a master bus internal to apparatus 200, to allow for the devices to exchange information. However, as the skilled person will appreciate, this is only one example and depending on the embodiment various ways of interconnecting at least two of the aforementioned devices may be selected without departing from the scope of the present invention

Performance of a radar may be measured and evaluated by considering a radar angular resolution of the radar. In general, the radar angular resolution of the radar may be referred to as a minimum distance at which the radar is capable of differentiating two objects, or targets, which are of the same size. The angular resolution of the radar may be improved by using Multiple-Input Multiple-Output, MIMO, technology. For example, time domain MIMO, frequency domain MIMO and full MIMO systems may be utilized.

However, the drawback of MIMO systems is that special radar hardware is required. Also, MIMO systems tend to be complex. Embodiments of the present invention therefore provide a digital beamforming algorithm for a radar which may be used to almost double the radar angular resolution without requiring any additional hardware. The performance of the radar is hence significantly improved. Also, embodiments of the present invention ensure that an antenna side lobe level stays in baseline, e.g., -13dB.

With reference to FIGURE 1 again, according to some embodiments of the present invention a first version of reflected electromagnetic signal 125 may be received using a receiver of apparatus 110. A second version of reflected electromagnetic signal 125 may be received using the receiver of apparatus 110 as well. Both, the first version of reflected electromagnetic signal 125 and second version of reflected electromagnetic signal 125, may comprise a phase and an amplitude. The phases and amplitudes may be stored to a memory of apparatus 110.

Moreover, the phase of the second version of reflected electromagnetic signal 125 may be mirrored over the phase of the first version of reflected electromagnetic signal 125 to generate a mirrored version of reflected electromagnetic signal 125. A processing unit of apparatus 110 may retrieve the phases and amplitudes from the memory and perform the mirroring, i.e., generation, of the mirrored version of reflected electromagnetic signal 125, possibly upon retrieving the phases and amplitudes of the first and second versions of electromagnetic signal from the memory of apparatus 110.

Thus, a magnitude and angle image may be determined based at least on the first version of reflected electromagnetic signal 125, the second version of reflected electromagnetic signal 125 and the mirrored version of reflected electromagnetic signal 125. A processing unit of the apparatus may perform the determination. The radar angular resolution may be almost doubled due to the use of the mirrored version of reflected electromagnetic signal 125. In some embodiments, the magnitude and angle image may be displayed to a user via a user interface. The user interface may be remote or it may be located in the apparatus.

For example, in some embodiments a first step may comprise setting of magnitudes of reflected signals in voltage values as magnitudes of mirrored signals in voltage values. A magnitude in voltage values may be referred to as amplitude and hence the first step may comprise setting amplitudes of mirrored signals as well. The setting of amplitudes of mirrored signals may be referred to as duplication as well. That is to say, the first step may comprise duplicating an amplitude of a reflected signal, i.e., mirroring an amplitude of the reflected signal, as an amplitude of a mirrored signal.

Moreover, a second step may comprise mirroring of phases of received signals to generate phases of the mirrored signals. Mirroring of phases may be performed by multiplication or summation.

An algorithm according to some embodiments of the present invention may be described as follows. It should be noted that the algorithm may be performed individually for each range bin and it may be suitable for a radar comprising at least two receive antennas. In some embodiments, receive antennas may be referred to as physical antennas of the radar, i.e., real antennas and each antenna may be associated with one radar channel.

Different reflected version of electromagnetic signal 125 may be received at each receive antenna and presented as a single voltage complex number per range bin. The voltage complex number may be presented as an amplitude and phase per range bin.

One real antenna may be chosen as a zero receive antenna, i.e., a center antenna. Assuming that the size of the receive antenna array of the radar is n, which may be referred to as a total number of receive antenna channels, amplitudes of *n-1* versions of a reflected signal, received by *n-1* real receive antennas, may be set as amplitudes of *n-1* virtual receive antennas. Virtual receive antennas may be referred to as mirrored antennas and one virtual receive antenna may correspond to, or be associated with, one real receive antenna.

Furthermore, a phase difference between a first version of the reflected signal received by the zero receive antenna and versions of signals received by each of the *n-1* real antennas may be determined. Then, phases of *n-1* versions of signals received by the *n-1* real antennas may be mirrored over, i.e., with respect to, the zero antenna to generate phases of the mirrored versions of *n-1* virtual antennas. That is to say, phases of the mirrored versions of *n-1* virtual antennas may be set so that the phase differences between the first received version of the reflected signal, received by the zero antenna, and each of the mirrored version of *n-1* virtual antennas are opposite compared to the phase differences between the first received version of the reflected signal and each of the *n-1* versions.

There may be various ways for calculating the phase difference. For example, a phase difference may be determined by summing the phase of the first version and the phase of one received version of the *n-1* versions. Alternatively, the phase difference may be determined by multiplicating the phase of the first version and the phase of one received version of the *n-1* versions. Multiplication may be preferred in some applications as it is more effective than summing.

As an example, multiplication may be performed using the following process. A phase difference between a version of the reflected signal received by a real antenna n and the first version of the reflected signal received by the zero antenna may be denoted by $\Delta\varphi_n$ and calculated as follows

$$\Delta\varphi_n = \arg((z_0 * z_n^*)^*) , \qquad (1)$$

wherein $z_0$ denotes a complex voltage of the first version of the reflected signal received at the zero antenna and $z_n$ denotes a complex voltage of the version of the reflected signal received by a real antenna $n$. That is to say, the complex voltage of the version of the reflected signal received at the real antenna $n$ may be formulated as $z_n = A_n(\cos\varphi_n + i * \sin\varphi_n)$, wherein $A_n$ denotes the amplitude and $\varphi_n$ denotes the phase of the version of the reflected signal received at the real antenna $n$. The complex voltage of the first version of the reflected signal received at the zero antenna, $z_0$, may be represented similarly.

If a virtual antenna corresponding to real antenna $n$ is denoted by $-n$, a mirrored complex voltage of the version of the reflected signal of virtual antenna $-n$ may be calculated as follows

$$z_{-n} = A_n(\cos(-\Delta\varphi_n + \varphi_0) + i * \sin(-\Delta\varphi_n + \varphi_0)). \qquad (2)$$

Moreover, in some applications it may be sufficient to consider only a radar magnitude image but absolute phase difference between the range bins is not necessarily needed. For such applications, the mirrored complex voltage of the version of the reflected signal of virtual antenna $-n$ may be calculated as follows

$$z_{-n} = A_n(\cos(-\Delta\varphi_n) + i * \sin(-\Delta\varphi_n)). \qquad (3)$$

However, it is noted that for some applications, such as, for example, movement detection and life sign monitoring, the absolute phase values may be needed.

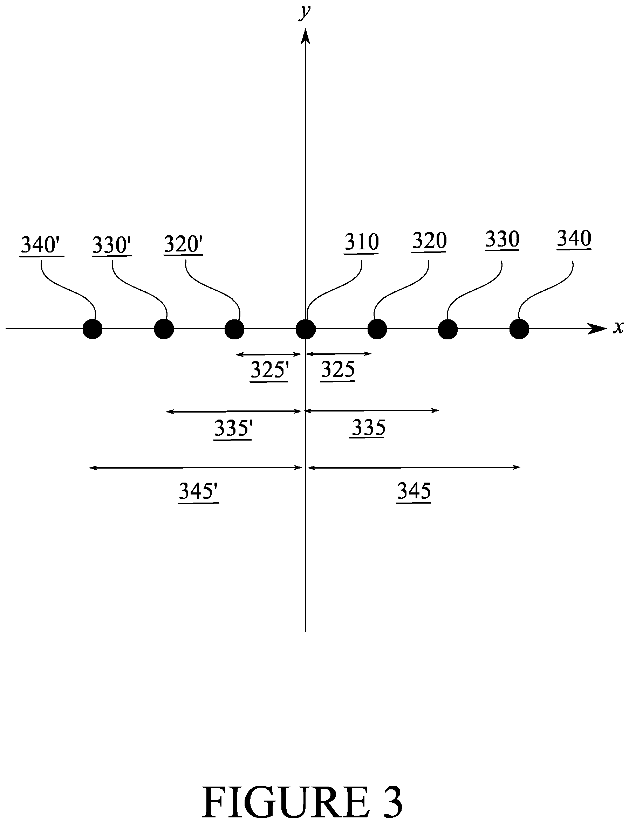

FIGURE 3 illustrates a first example of mirroring in accordance with at least some embodiments of the present invention. FIGURE 3 demonstrates an exemplary scenario, wherein a receiver comprises four receive antennas. In FIGURE 3, a physical location of real antennas is represented using the x-axis and the y-axis. For simplicity, the example of FIGURE 3 shows a 1-dimensional receive antenna array, wherein four receive antennas are located on the x-axis, i.e, horizontally.

In FIGURE 3, a first version of a reflected signal may be associated with a zero receive antenna 310, i.e., the first version of the reflected signal may be received by the zero receive antenna 310. Similarly, a second version of the reflected signal may be received by a first receive antenna 320, a third version of the reflected signal may be received by a second receive antenna 330 and a fourth version of a reflected signal is may be received by a third receive antenna 340. That is to say, locations 310, 320, 330 and 340 may represent real physical locations of the antennas.

Then, a difference between a location of the zero receive antenna 310 and a location of the first receive antenna 320 is denoted by 325. Similarly, a difference between a location of the zero receive antenna 310 and a location of the second receive antenna 330 is denoted by 335, and a difference between a location of the zero receive antenna 310 and a location of the third receive antenna 340 is denoted by 345.

Each of the received versions of the reflected signal may have a phase and an amplitude and phase difference between the first version and each of the second, third and fourth versions may be determined. Upon determining the differences in phases, mirroring may be performed, e.g., by a processing unit of the apparatus. The mirroring may be performed for each version of the reflected signal individually, except for the first version, to generate virtual antennas. Moreover, a phase and amplitude of a first mirrored signal associated with a first virtual antenna 320' may be determined. A difference between a location of the zero receive antenna 310 and the location of the first virtual antenna is denoted by 325' in FIGURE 3. Location of the first virtual antenna is denoted by 320'.

Determination of the phase and amplitude of first mirrored version of the reflected signal, associated with the first virtual antenna 320', may comprise mirroring a phase of the second received version of the reflected signal, received by the first receive antenna 320, with respect to a phase of the first received version of the reflected signal, received by the zero receive antenna 310, and setting an amplitude of the second received version of the reflected signal as the amplitude of the first mirrored version of the reflected signal. Thus, the difference in phase between the first version of the reflected signal and the first mirrored version of the reflected signal may be equal in absolute value compared to the difference in phase between the first version of the reflected signal and the second version of the reflected signal.

However, the difference in phase between the first version of the reflected signal and the first mirrored version of the reflected signal may be opposite compared to the difference in phase between the first version of the reflected signal and the second version of the reflected signal.

For example, if the difference in phase between the first version of the reflected signal and the second version of the reflected signal would be 50 degrees, the difference in phase between the first version of the reflected signal and the first mirrored version of the reflected signal would be -50 degrees.

Phase and amplitude for a second mirrored signal, associated with a second virtual antenna 330', may be mirrored and set similarly based on the third version of the reflected signal, associated with the second receive antenna 330. Also, a phase and amplitude of a third mirrored signal, associated with a third virtual antenna 340', may be mirrored and set similarly as well based on the fourth version of the reflected signal, associated with the third receive antenna 340. Upon determining phases and amplitudes associated with the first, second and third mirrored signals, a magnitude and angle image may be determined, and possibly displayed to a user via a user interface, based on the first received, second received, third received and fourth received signals along with first, second and third mirrored signals.

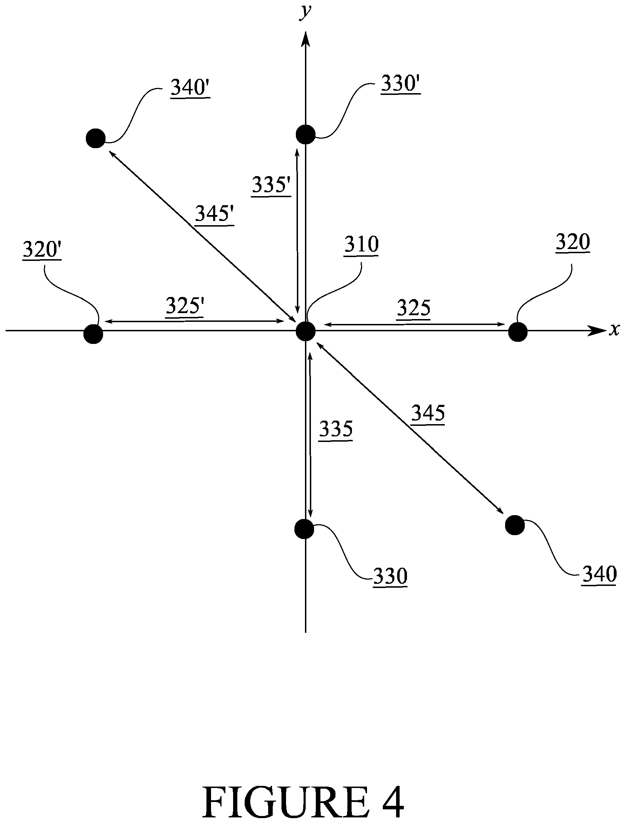

FIGURE 4 illustrates a second example of mirroring in accordance with at least some embodiments of the present invention. With reference to FIGURE 3, a location of a zero receive antenna is denoted by 310, a location of a first receive antenna is denoted by 320, a location of a second receive antenna is denoted by 330 and a location of a third receive antenna is denoted by 340. Also, a difference between a location of the zero receive antenna 310 and a location of the first receive antenna 320 is denoted by 325, a difference between a location of the zero receive antenna 310 and a location of the second receive antenna 330 is denoted by 335 and a difference between a location of the zero receive antenna 310 and a location of the third receive antenna 340 is denoted by 345.

Furthermore, a location of a first virtual antenna is denoted by 320', a location of a second virtual antenna is denoted by 330', a location of a third virtual antenna is denoted by 340'. Differences 325', 335' and 345' between locations may correspond to 325, 335 and 345, respectively.

As demonstrated in FIGURE 4, a receive antenna array may be 2-dimensional and there may be receive antennas at different locations on the x- and y-axes, with respect to the zero receive antenna 310. That is to say, a receive antenna array may comprise receive antennas in vertical and horizontal directions with respect to the zero antenna. Then, the virtual antennas may represent a location similarly. For example, third virtual antenna may be interpreted to be in location 340', which may be opposite to location 340, with respect to location 310 of the zero receive antenna. That is to say, location 340' of the first virtual antenna may be seen to correspond placing an additional, real receive antenna at location 340'. However, embodiments of the present invention do not require the additional real receive antennas because similar benefits may be achieved by mirroring phases and setting amplitudes for the virtual antennas.

Mirroring of phases and setting of amplitudes may be performed similarly as in the example of FIGURE 3. Thus, a phase and amplitude of a first mirrored signal associated with a first virtual antenna 320', a phase and amplitude of a second mirrored signal associated with the second virtual antenna 330' and a phase and amplitude of a third mirrored signal associated with a third virtual antenna 340' may be determined. In addition, an angle and magnitude image may be determined by exploiting on the mirrored signals.

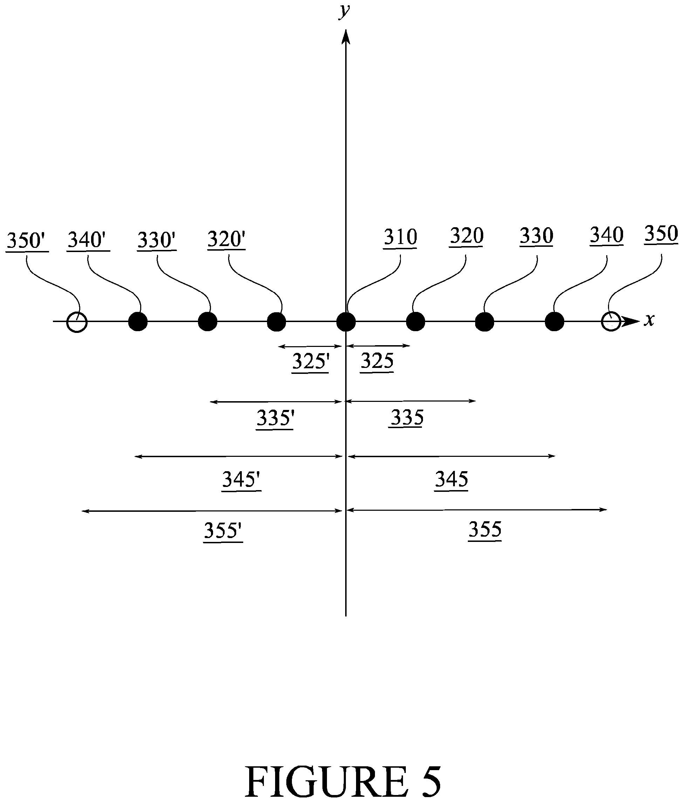

FIGURE 5 illustrates a third example of mirroring in accordance with at least some embodiments of the present invention. Again, with reference to FIGUREs 3 and 4, antennas 310 - 345 and 320' - 345' in FIGURE 5 may correspond to the same antennas of FIGURE 3 and 4.

In addition, the third example of FIGURE 5 may comprise an extrapolated version of the reflected signal. The extrapolated version of the reflected signal may be associated with an extrapolated antenna 350. The extrapolated antenna may be virtually located at 350, i.e., the extrapolated antenna may not be a real physical antenna. A difference between location of the zero receive antenna and location of the extrapolated antenna is denoted by 355.

An apparatus may comprise means for generating, or be configured to generate, the extrapolated version of the reflected signal. According to the example of FIGURE 5, the extrapolation may be performed using phases and amplitudes of first version, second version, third version and fourth version of the reflected signal. However, in general the extrapolation may be performed using at least two versions of the reflected signal. A processing unit of the apparatus may comprise means for performing, or be configured to perform, the extrapolation. As an example, the Burg algorithm may be used for extrapolation.

Then, a difference in phase between the phase of the first version of the reflected signal, associated with the zero antenna at location 310, and the phase of the extrapolated version of the reflected signal, associated with the extrapolated antenna at location 350, may be determined. Upon determining the difference in phase, mirroring may be performed to generate an extrapolated mirrored version of the received signal, e.g., by a processing unit of the apparatus. The mirroring may comprise mirroring the phase of the extrapolated version of the reflected signal with respect to the phase of the first version of the reflected signal to determine a phase of a mirrored and extrapolated version of the reflected signal and setting the amplitude of the extrapolated version of the reflected signal as an amplitude of the mirrored and extrapolated version of the reflected signal.

Moreover, the mirrored and extrapolated version of the reflected signal may be associated with an mirrored and extrapolated virtual antenna 350'. The extrapolated virtual antenna may be seen to be located at 350'. A difference between a location of the zero receive antenna 310 and the mirrored and extrapolated virtual antenna 350' is denoted by 555' in FIGURE 5, and it may be opposite compared to 555. Naturally, more than one extrapolated versions of the reflected signal may be generated and mirrored as well.

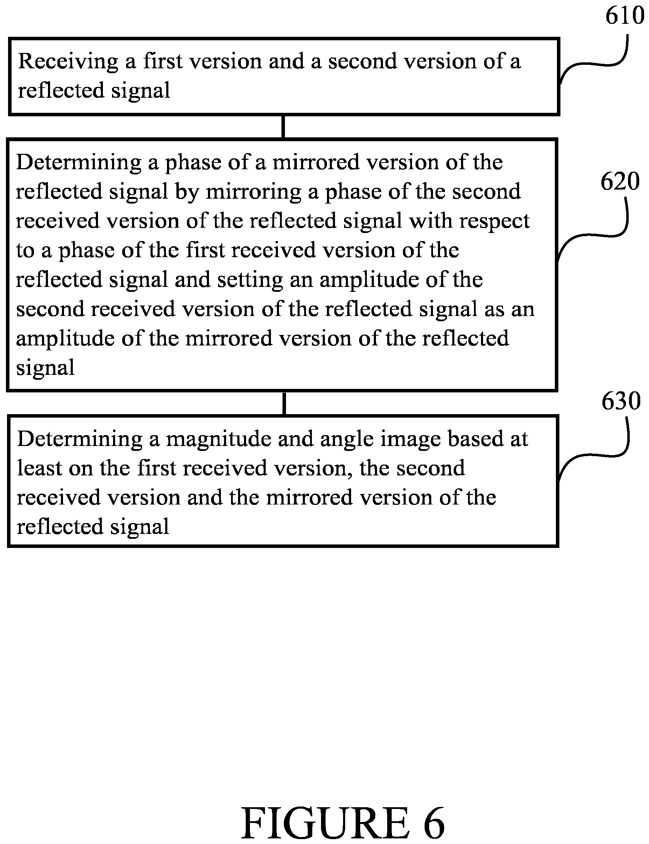

FIGURE 6 illustrates a flow graph of a method in accordance with at least some embodiments of the present invention. The phases of the illustrated method may be for an apparatus, e.g., performed by apparatus 110, an apparatus for a radar, radar or by a control device configured to control the functioning thereof, possibly when installed therein. Apparatus 110 may comprise means for performing, or be configured to perform, the illustrated method. Also, there may be a computer program configured to perform the illustrated method.

The method may comprise, at step 610, receiving a first version and a second version of a reflected signal. Also, the method may comprise, at step 620, determining a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal. Finally, the method may comprise, at step 630, determining a magnitude and angle image based at least on the first received version, second received version and mirrored version of the reflected signal. Alternatively, or in addition, the mirroring may comprise mirroring the phase of the second received version of the reflected signal over the phase of the first received version of the reflected signal

In some embodiments, the method may comprise displaying said magnitude and angle image, possibly via a user interface to a user.

In some embodiments, the method may comprise detecting an object based at least on the first received version, second received version and mirrored version of the reflected signal.

In some embodiments, the method may comprise determining a phase difference between the phase of the first received version of the reflected signal and the phase of the second received version of the reflected signal and determining the phase of the mirrored version of the reflected signal using the phase difference. The mirroring may comprise setting the phase of the mirrored version as opposite to the determined phase difference.

In some embodiments, the received first and second versions of the reflected signal may be different reflected versions of the reflected signal.

In some embodiments, the first and second received versions are received via real antennas and the mirrored version of the reflected signal is associated with a virtual antenna. The first version may be received at a zero antenna and the second version may be received at a first antenna. The apparatus may comprise the zero and the first antennas.

In some embodiments, the method may comprise transmitting a signal and receiving a first and a second reflected version of the transmitted signal. Hence, in some embodiments the first version of the reflected signal may correspond to the first version of the transmitted signal and the second version of the reflected signal may correspond to the second version of the transmitted signal. Moreover, in some embodiments the transmitted signal may be a FMCW, pulse. an arbitrary waveform signal or an OFDM signal.

In some embodiments, the method may further comprise transmitting *M* versions of a signal via *M* transmit antennas, receiving *M* reflected versions of the signal via each of *N* receive antennas and detecting an object based at least partially on the received *M\*N* reflected versions of the signal, wherein *M* may refer to a number of transmit antennas and *N* may refer to a number of receive antennas. If a transmit antenna array is used, *M* may larger than one. On the other hand, if a receive antenna array is used, *N* may be larger than one.

In some embodiments, the method may comprise generating an extrapolated version of the reflected signal by extrapolating using at least the received first and second versions of the reflected signal, determining an extrapolated mirrored version of the reflected signal by mirroring a phase of the extrapolated version of the reflected signal with respect to the phase of the first received version of the reflected signal and setting an amplitude of the extrapolated version of the reflected signal as an amplitude of the extrapolated mirrored version of the reflected signal and detecting an object based at least on the extrapolated and the extrapolated mirrored versions of the reflected signal.

In some embodiments, the method may comprise generating an interpolated version of the reflected signal, determining an interpolated mirrored version of the reflected signal by mirroring a phase of the interpolated version of the reflected signal with respect to the phase of the first received version of the reflected signal and setting an amplitude of the interpolated version of the reflected signal as an amplitude of the interpolated mirrored version of the reflected signal and determining the magnitude and angle image based at least on the interpolated and the interpolated mirrored versions of the reflected signal.

As an example, if there would be real antennas at locations 0, 1, 2 and 5, virtual antennas may be generated for locations 3 and 4 using interpolation. With reference to FIGURE 5, if it is assumed that antennas 310, 320, 330 and 350 are real antennas but there is no real antenna at location 340, interpolation may be used to generate a virtual antenna for location 340. The interpolated version of the reflected signal may be mirrored as well. In some embodiments, the interpolated version of the reflected signal may be generated using the Burg algorithm.

In some embodiments, the apparatus may comprise a two-dimensional receive antenna array, and the receive antenna array may comprise multiple antennas in horizontal and vertical directions. Moreover, in some embodiments, the first version of the reflected signal may be received by a zero antenna of a receive antenna array of the apparatus and the second version of the reflected signal may be received by a first antenna of the receive antenna array of the apparatus.

According to the embodiments of the present invention, the performance of the apparatus may be improved by generating at least one mirrored version of a reflected signal. Embodiments of the present invention also enable efficient operation of the apparatus. For example, a process performed according to embodiments of the present invention may be performed quickly, because the time that is needed for performing the process is negligible at least in simple linear antenna arrays and moderate with larger two-dimensional antenna arrays. Embodiments of the present invention may be applied together with MIMO to further increase the angular resolution of the apparatus.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

In an exemplary embodiment, an apparatus, such as, for example, a radar or a control device for controlling the radar, may comprise means for carrying out the embodiments described above and any combination thereof.

In an exemplary embodiment, a computer program may be configured to cause a method in accordance with the embodiments described above and any combination thereof. In an exemplary embodiment, a computer program product, embodied on a non-transitory computer readable medium, may be configured to control a processing unit to perform a process comprising the embodiments described above and any combination thereof.

In an exemplary embodiment, an apparatus, such as, for example, a radar or a control device for controlling the radar, may comprise at least one processing unit, and at least one memory including computer program code, wherein the at least one memory and the computer program code are configured to, with the at least one processing unit, cause the apparatus at least to perform the embodiments described above and any combination thereof.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

INDUSTRIAL APPLICABILITY

At least some embodiments of the present invention find industrial application in radars.

ACRONYMS LIST

ASIC      Application-Specific Integrated Circuit

FMCW Frequency-Modulated Continuous Wave

FPGA Field-Programmable Gate Array

MIMO Multiple-Input Multiple-Output

OFDM Orthogonal Frequency Division Multiplexing

RAM Random-Access Memory

UI User Interface

REFERENCE SIGNS LIST

| 110 | Apparatus |
|---|---|
| 115, 125 | Electromagnetic signals |
| 120 | Object |
| 200 - 250 | Structure of the apparatus of FIGURE 2 |
| 310, 320, 330, 340 | Real antennas |
| 320', 330', 340', 350' | Virtual, mirrored antennas |
| 325, 335, 345, | Distances related to real antennas |
| 325', 335', 345', 355' | Distances related to virtual, mirrored antennas |
| 350 | Extrapolated antenna |
| 355 | Distance related to the extrapolated antenna |
| 610 - 630 | Phases of the method of FIGURE 6 |

**Claims**

1. An apparatus, comprising:

   - a receiver configured to receive a first version of a reflected signal and a second version of the reflected signal; and
   - a processing unit configured to determine a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal,
   - wherein the processing unit is further configured to determine a magnitude and angle image based at least on the first received version, second received version and mirrored version of the reflected signal.

2. An apparatus according to claim 1, wherein the mirroring comprises mirroring the phase of the second received version of the reflected signal over the phase of the first received version of the reflected signal.

3. An apparatus according to claim 1 or claim 2, wherein the processing unit is further configured to:

   - determine a phase difference between the phase of the first received version of the reflected signal and the phase of the second received version of the reflected signal; and
   - determine the phase of the mirrored version of the reflected signal using the phase difference,

   wherein the mirroring comprises setting the phase of the mirrored version as opposite to the determined phase difference.

4.  An apparatus according to any of the preceding claims, wherein the first and second received versions are received via real antennas and the mirrored version of the reflected signal is associated with a virtual antenna.

5.  An apparatus according to any of the preceding claims, further comprising:

    - a transmitter configured to transmit a signal, wherein the transmitted signal is a Frequency-Modulated Continuous Wave, FMCW, pulse or an arbitrary waveform signal, possibly an Orthogonal Frequency Division Multiplexed, OFDM, signal.

6.  An apparatus according to any of the preceding claims, further comprising:

    - a transmit antenna array configured to transmit *M* versions of a signal via *M* transmit antennas;
    - a receive antenna array configured to receive *M* reflected versions of the signal via each of *N* receive antennas,
    - wherein the processing unit is further configured to determine the magnitude and angle image based at least partially on the received *M*N* reflected versions of the signal.

7.  An apparatus according to any of the preceding claims, wherein the processing unit is further configured to:

    - generate an extrapolated version of the reflected signal by extrapolating using at least the received first and second versions of the reflected signal;
    - determine an extrapolated mirrored version of the reflected signal by mirroring a phase of the extrapolated version of the reflected signal with respect to the phase of the first received version of the reflected signal and setting an amplitude of the extrapolated version of the reflected signal as an amplitude of the extrapolated mirrored version of the reflected signal; and
    - determine the magnitude and angle image based at least on the extrapolated and the extrapolated mirrored versions of the reflected signal.

8.  An apparatus according to any of the preceding claims, wherein the processing unit is further configured to:

    - generate an interpolated version of the reflected signal;
    - determine an interpolated mirrored version of the reflected signal by mirroring a phase of the interpolated version of the reflected signal with respect to the phase of the first received version of the reflected signal and setting an amplitude of the interpolated version of the reflected signal as an amplitude of the interpolated mirrored version of the reflected signal; and
    - determine the magnitude and angle image based at least on the interpolated and the interpolated mirrored versions of the reflected signal.

9.  A method for a radar, comprising:

    - receiving a first version of a reflected signal;
    - receiving a second version of the reflected signal;
    - determining a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal; and
    - determining a magnitude and angle image based at least on the first received version, second received version and mirrored version of the reflected signal.

10. A method according to claim 9, wherein the mirroring comprises mirroring the phase of the second received version of the reflected signal over the phase of the first received version of the reflected signal.

11. A method according to claim 9 or claim 10, further comprising:

    - determining a phase difference between the phase of the first received version of the reflected signal and the phase of the second received version of the reflected signal; and
    - determining the phase of the mirrored version of the reflected signal using the phase difference,

    wherein the mirroring comprises setting the phase of the mirrored version as opposite to the determined phase difference.

12. A method according to any of claims 9 - 11, wherein the first and second received versions are received via real antennas and the mirrored version of the reflected signal is associated with a virtual antenna.

13. A method according to any of claims 9 - 12, further comprising:

- transmitting a signal, wherein the transmitted signal is a Frequency-Modulated Continuous Wave, FMCW, pulse or an arbitrary waveform signal, possibly an Orthogonal Frequency Division Multiplexed, OFDM, signal.

14. A method according to any of claims 9 - 13, further comprising:

- transmitting $M$ versions of a signal via $M$ transmit antennas;
- receiving $M$ reflected versions of the signal via each of $N$ receive antennas; and
- determining the magnitude and angle image based at least partially on the received $M*N$ reflected versions of the signal.

15. A computer program configured to perform a method according to any of claims 9 - 14.

# FIGURE 1

# FIGURE 2

**FIGURE 3**

FIGURE 4

# FIGURE 5

610

Receiving a first version and a second version of a reflected signal

Determining a phase of a mirrored version of the reflected signal by mirroring a phase of the second received version of the reflected signal with respect to a phase of the first received version of the reflected signal and setting an amplitude of the second received version of the reflected signal as an amplitude of the mirrored version of the reflected signal

620

Determining a magnitude and angle image based at least on the first received version, the second received version and the mirrored version of the reflected signal

630

# FIGURE 6

Europäisches
Patentamt

European
Patent Office

Office européen
des brevets

# EUROPEAN SEARCH REPORT

Application Number

EP 18 20 6721

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/285315 A1 (DAVIS DENNIS W [US] ET AL) 13 December 2007 (2007-12-13) * abstract; figures 12-14 * * paragraph [0131] * * paragraph [0151] - paragraph [0156] * ----- | 1-15 | INV. G01S13/44 H01Q3/26 H01Q21/22 |
| A | WO 2004/019447 A2 (ZYRAY WIRELESS INC [US]) 4 March 2004 (2004-03-04) * the whole document * ----- | 1-15 | |
| A | EP 3 001 221 A1 (DELPHI TECH INC [US]) 30 March 2016 (2016-03-30) * the whole document * ----- | 1-15 | |
| A | WO 2005/011047 A2 (JUDD MANO DORSEY [US]) 3 February 2005 (2005-02-03) * the whole document * ----- | 1-15 | |
| | | | TECHNICAL FIELDS SEARCHED (IPC) G01S H01Q |

The present search report has been drawn up for all claims

| Place of search | Date of completion of the search | Examiner |
|---|---|---|
| Munich | 16 May 2019 | López de Valle, J |

EPO FORM 1503 03.82 (P04C01)

## ANNEX TO THE EUROPEAN SEARCH REPORT
## ON EUROPEAN PATENT APPLICATION NO.

EP 18 20 6721

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2019

| Patent document cited in search report | | Publication date | Patent family member(s) | | Publication date |
|---|---|---|---|---|---|
| US 2007285315 | A1 | 13-12-2007 | NONE | | |
| WO 2004019447 | A2 | 04-03-2004 | AU | 2003262848 A1 | 11-03-2004 |
| | | | CN | 1695271 A | 09-11-2005 |
| | | | DE | 60313336 T2 | 10-04-2008 |
| | | | EP | 1540763 A2 | 15-06-2005 |
| | | | US | 2004104844 A1 | 03-06-2004 |
| | | | US | 2007109191 A1 | 17-05-2007 |
| | | | US | 2008303719 A1 | 11-12-2008 |
| | | | US | 2010039325 A1 | 18-02-2010 |
| | | | WO | 2004019447 A2 | 04-03-2004 |
| EP 3001221 | A1 | 30-03-2016 | CN | 105467372 A | 06-04-2016 |
| | | | EP | 3001221 A1 | 30-03-2016 |
| | | | US | 2016091595 A1 | 31-03-2016 |
| WO 2005011047 | A2 | 03-02-2005 | US | 2005030228 A1 | 10-02-2005 |
| | | | WO | 2005011047 A2 | 03-02-2005 |

EPO FORM P0459

For more details about this annex : see Official Journal of the European Patent Office, No. 12/82